# EUROPÄISCHE PATENTSCHRIFT

(11) **EP 2 277 749 B1**
(45) Veröffentlichungstag und Bekanntmachung des Hinweises auf die Patenterteilung: **10.10.2012**
(21) Anmeldenummer: 10167877.9
(22) Anmeldetag: 30.06.2010
(51) Int. Cl.: B60R 25/02

(54) **Vorrichtung zum Sperren eines funktionswesentlichen Bauteils eines Kraftfahrzeugs**
Device for blocking an essential component of a motor vehicle
Dispositif de fermeture d'un composant essentiellement fonctionnel de véhicule automobile

(30) Priorität: 24.07.2009 DE 102009034606
(43) Veröffentlichungstag der Anmeldung: 26.01.2011
(73) Patentinhaber: Huf Hülsbeck & Fürst GmbH & Co. KG, 42551 Velbert (DE)
(72) Erfinder: Suraev, Pavel, 82131, Gauting (DE)
(74) Vertreter: Vogel, Andreas

(56) Entgegenhaltungen:
- EP-A1- 0 989 038
- EP-A2- 2 025 567
- DE-T2- 69 907 110
- US-B1- 6 249 061

## Beschreibung

Die Erfindung richtet sich auf eine Sperrvorrichtung zum Sperren eines funktionswesentlichen Bauteils eines Kraftfahrzeugs, insbesondere zur Sperrung einer Lenkspindel. Die Sperrvorrichtung umfasst einen ersten Körperteil, in dem ein Sperrbolzen aufgenommen ist, der in einer Hubachse zwischen einer Sperrstellung zur Sperrung des funktionswesentlichen Bauteils und einer Freigabestellung zur Freigabe des funktionswesentlichen Bauteils beweglich ist. Ferner umfasst die Sperrvorrichtung einen zweiten Körperteil, in dem Mittel zur Bewegung des Sperrbolzens zwischen der Sperrstellung und der Freigabestellung aufgenommen sind, wobei ein Sicherungselement vorgesehen ist, das in einer Eingriffsstellung eine Bewegung des Sperrbolzens verhindert und in einer Rückzugsstellung eine Bewegung des Sperrbolzens freigibt. Das Sicherungselement ist durch ein Sicherungsmittel in der Rückzugsstellung gehalten, wenn der erste Körperteil am zweiten Körperteil angeordnet ist, und wobei das Sicherungselement in die Eingriffsstellung freigebbar ist, wenn der erste Körperteil in seiner Anordnung zum zweiten Körperteil verändert wird.

Aus der DE 699 07 110 T2 ist eine Sperrvorrichtung zum Sperren einer Lenkspindel eines Kraftfahrzeugs nach dem Oberbegriff des Anspruchs 1 bekannt. Die Sperrvorrichtung unterteilt sich in einen ersten Körperteil und einen zweiten Körperteil, die einstöckig miteinander verbunden sind und wobei zwischen den Körperteilen ein verjüngtes Teil vorgesehen ist, die die beiden Körperteile miteinander verbindet. Dieses verjüngte Teil bildet eine Sollbruchstelle, so dass bei einer Stoßeinwirkung wenigstens auf den zweiten Körperteil ermöglicht wird, die beiden Körperteile teilweise oder ganz voneinander zu trennen, insbesondere um zu vermeiden, dass das zweite Körperteil im Fahrgastraum ein Hindernis bildet, das den Fahrer bzw. den Beifahrer im Falle eines Unfalls verletzen könnte. Im ersten Körperteil ist ein Sperrbolzen aufgenommen, der in einer Hubachse zwischen einer Sperrstellung zur Sperrung der Lenksäule und in einer Freigabestellung zur Freigabe der Lenksäule beweglich ist. Im zweiten Körperteil sind nicht näher gezeigte Mittel zur Bewegung des Sperrbolzens vorhanden, um diesen zwischen der Sperrstellung und der Freigabestellung zu bewegen.

Ein Sicherungselement ist in Gestalt einer Platte ausgeführt, die zwischen einer Eingriffsstellung und einer Rückzugsstellung beweglich ist, um den Sperrbolzen zu blockieren bzw. freizugeben. Um das Sicherungselement im gewöhnlichen Betrieb der Sperrvorrichtung in der Rückzugsstellung dauerhaft zu halten, ist ein Sicherungsmittel in Form einer Haltestange gezeigt. Die Haltestange ist als gerade ausgebildetes Halteelement ausgeführt und besitzt einen freien, vorderen Endabschnitt, um mit der Halteplatte zusammenzuwirken. Die andere Endseite der Längshaltestange weist einen halbkugelförmig abgerundeten Kopf auf, der mit einem Boden einer rechtwinkligen Aufnahme zusammenwirkt, der gegenüberliegend im zweiten Körperteil der Sperrvorrichtung eingebracht ist. Ferner trägt der hintere Längsendabschnitt der Haltestange eine spiralförmige Druckfeder, die sich am Boden der Aufnahme des ersten Körperteils der Sperrvorrichtung abstützt. Damit wird die spiralförmige Druckfeder dauerhaft unter Spannung gehalten. Ändert sich die Lage oder die Anordnung des zweiten Körperteils relativ zum ersten Körperteil der Sperrvorrichtung, so kann die Längshaltestange in Richtung zum halbkugelförmig abgerundeten Kopf aus dem ersten Körperteil heraus gelangen, so dass die Platte freigegeben wird, die in den Sperrbolzen einrasten kann.

Folglich wird der Sperrbolzen im ersten Körperteil festgesetzt, sobald sich die Lage des ersten Körperteils relativ zur Lage des zweiten Körperteils verändert. Jedoch hat die vorgeschlagene Anordnung zum Nachteil, dass ein zuverlässiger Rückzug des Sicherungsmittels zur Freigabe des Sicherungselementes nicht gewährleistet ist, so dass das Sicherungselement den Sperrbolzen im zweiten Körperteil sicher blockieren kann. Ferner ist das Sicherungsmittel mit dem endseitig vorhandenen halbkugelförmigen, abgerundeten Kopf aufwändig ausgestaltet und zusätzlich ist eine spiralförmige Druckfeder erforderlich.

Es ist daher die Aufgabe der vorliegenden Erfindung, eine Sperrvorrichtung der vorstehend genannten Art zu verbessern und eine vereinfachte Ausführung eines Sicherungsmittels zur Wechselwirkung mit einem Sicherungselement vorzuschlagen, welches einen Sperrbolzen sperren kann, wenn die Anordnung des zweiten Körperteils relativ zum ersten Körperteil der Sperrvorrichtung verändert wird.

Diese Aufgabe wird ausgehend von einer Sperrvorrichtung gemäß dem Oberbegriff des Anspruches 1 in Verbindung mit den kennzeichnenden Merkmalen gelöst. Weitere vorteilhafte Weiterbildungen der Erfindung sind in den abhängigen Ansprüchen angegeben.

Die Erfindung schließt die technische Lehre ein, dass das Sicherungsmittel als Federelement ausgebildet ist und eine federelastische Vorspannung aufweist, wenn der erste Körperteil am zweiten Körperteil angeordnet ist, wobei die federelastische Vorspannung im Federelement derart ausgebildet ist, dass das Federelement durch Rückfederung das Sicherungselement aus der Rückzugsstellung in die Eingriffsstellung freigibt, wenn der erste Körperteil in seiner Anordnung zum zweiten Körperteil verändert wird.

Die Erfindung geht dabei von dem Gedanken aus, die Aktivierung der Rückzugsbewegung des Sicherungsmittels einfach und zuverlässig zu gestalten. Das Sicherungsmittel bildet dabei das Federelement selbst, und weist eine in sich vorhandene federelastische Vorspannung auf, wenn sich der erste Körperteil am zweiten Körperteil befindet, also dann, wenn das Federelement in der geordneten, eingebauten Lage angeordnet ist. Durch die im Federelement vorhandene federelastische Vorspannung kann diese eine Rückfederung des Federelementes dann ermöglichen, wenn das Federelement zwischen dem ersten und dem zweiten Körperteil nicht mehr korrekt gehalten wird, etwa dann, wenn die Anordnung des ersten Körperteils zum zweiten Körperteil verändert wird. Die Rückfederung des Federelementes erfolgt dabei in der Richtung, in der das Federelement das Sicherungselement freigibt. Folglich wird der Sperrbolzen im ersten Körperteil nicht festgesetzt, sobald sich die Anordnung des zweiten Körperteils relativ zum ersten Körperteil verändert.

Die Änderung der Anordnung des ersten Körperteils in seiner Anordnung zum zweiten Körperteil kann z. B. durch ein Trennen oder eine durch eine Lageänderung des ersten Körperteils vom oder relativ zum zweiten Körperteil gebildet werden.

Es hat sich als besonders vorteilhaft herausgestellt, das Federelement als Drahtelement auszuführen, wobei das Drahtelement vorzugsweise wenigstens eine Biegestelle aufweist, durch die das Drahtelement in einen ersten Schenkel und in einen zweiten Schenkel unterteilt wird. Das Drahtelement ist dabei einteilig, und kann einen runden oder flach ausgebildeten Querschnitt besitzen. Durch die Biegestelle entsteht im Drahtelement eine Unterteilung in einen ersten und einen zweiten Schenkel, so dass die federelastische Vorspannung zwischen dem ersten und dem zweiten Schenkel in das Federelement eingebracht werden kann.

Vorteilhafterweise weist der erste Körperteil eine Aufnahme auf, in die zumindest der erste Schenkel des Federelementes wenigstens teilweise entlang einer Rückfederachse beweglich geführt aufgenommen wird. Die Aufnahme kann als Bohrung im ersten Körperteil ausgeführt werden, so dass das Federelement mit dem ersten Schenkel in die Bohrung eingesetzt wird. Die Rückfederachse bildet dabei diejenige Achse, entlang der der erste Schenkel des Drahtelementes verschiebbar ist, um mit dem Sicherungselement in der Rückzugsstellung zusammenzuwirken und das Sicherungselement in der Eingriffsstellung freizugeben, damit dieses in den Sperrbolzen eingreifen kann. Folglich beschreibt die Rückfederachse eine Hubachse, und das Federelement kann bei einer Änderung der Lage des ersten Körperteil relativ zum zweiten Körperteil der Sperrvorrichtung in Richtung zur Rückfederachse aus der Aufnahme heraus ein Stück weit herausspringen, um aus dem Eingriff mit dem Sicherungselement heraus zu gelangen.

Es ist von weiterem Vorteil, dass der erste Körperteil und der zweite Körperteil in einer Trennebene aneinander angrenzen, wobei sich der zweite Schenkel des Federelementes in die Trennebene hinein erstreckt. Der erste Schenkel des Federelementes, der in der Aufnahme im ersten Körperteil eingesetzt ist, verläuft etwa parallel zur Hubachse des Sperrbolzens. Durch die Biegestelle im Federelement kann sich dabei der zweite Schenkel des Federelementes in der Trennebene erstrecken, die eine nicht zwingend gleichförmige Teilungsfläche des ersten Körperteils und des zweiten Körperteils beschreibt. Bei der Montage wird zunächst das Federelement mit dem ersten Schenkel in die Aufnahme eingeführt, wobei nachfolgend erst der zweite Körperteil vollständig am ersten Körperteil angeordnet wird. Bei dieser Anordnung wird die elastische Vorspannung in das Federelement eingegeben, die im gewöhnlichen Betrieb der Sperrvorrichtung im Federelement aufrecht erhalten bleibt.

Durch die beschriebene Anordnung des ersten Schenkels und des zweiten Schenkels des Federelementes im ersten Körperteil bzw. in der Teilungsebene zwischen dem ersten Körperteil und dem zweiten Körperteil schließt der erste Schenkel und zweite Schenkel des Federelementes einen Winkel zueinander ein, wobei der Winkel unter der Vorspannung im Federelement größer ist als bei Rückfederung des Federelementes in den entspannten Zustand. Die Schenkel des Federelementes werden bei Montage des Federelementes in die Aufnahme und zwischen die beiden Körperteile in der Trennebene elastisch auseinandergebogen, so dass die elastische Vorspannung in das Federelement eingebracht wird. Dabei vergrößert sich der Winkel zwischen den beiden Schenkeln, und der ursprüngliche, kleinere Winkel wird erst wieder eingenommen, wenn das Federelement aus der Aufnahme zurückfedert. Folglich wird die Vorspannung durch ein Verspannen in das Federelement eingebracht, indem das erste Körperteil am zweiten Körperteil angeordnet und der zweite Schenkel in der Trennebene zwischen dem ersten Körperteil und dem zweiten Körperteil unter Aufbringung der Vorspannung geklemmt wird.

Gemäß einer weiteren möglichen Ausführungsform der Sperrvorrichtung kann der zweite Körperteil ein separierbares Bauelement umfassen, welches vorzugsweise an die Trennebene angrenzt, und wobei das separierbare Bauelement insbesondere ein elektrisches Schalterelement ist. Der erste und der zweite Körperteil der Sperrvorrichtung kann dabei einteilig sein, wobei vorliegend das separierbare Bauteil zum zweiten Körperteil zählt, so dass eine Änderung der Anordnung des zweiten Körperteils am ersten Körperteil auch oder insbesondere durch eine Manipulation und/oder durch ein Entfernen des separierbaren Bauelementes am ersten Körperteil hervorgerufen wird. Beispielsweise kann das elektrische Schalterelement gewaltsam vom zweiten Körperteil getrennt werden, wobei dadurch die Vorspannung im Federelement gelöst werden kann, da der zweite Schenkel des Federelementes in der Trennebene angeordnet ist und folglich an das elektrische Schalterelement angrenzt. Wird das elektrische Schalterelement entfernt, kann sich der Winkel zwischen dem ersten und dem zweiten Schenkel verkleinern, so dass gleichzeitig der erste Schenkel des Federelementes aus der Aufnahme zumindest ein Stück weit herausspringt. Damit wird das Sicherungselement freigegeben, und der Sperrbolzen blockiert die Lenkspindel.

Die Mittel zur Bewegung des Sperrbolzens im zweiten Körperteil können einen Schließzylinder umfassen, in den ein Schlüssel zur Drehung des Schließzylinders einbringbar ist. Ferner kann ein Mitnehmerelement vorgesehen sein, das ebenfalls als Mittel zur Bewegung des Sperrbolzens dient. Das Mitnehmerelement kann durch Drehung des Schließzylinders bewegt werden, wobei das Mitnehmerelement mit dem Sperrbolzen in Wirkverbindung steht, um diesen bei Drehung des Schließzylinders zwischen der Sperrstellung und der Freigabestellung entlang der Hubachse zu bewegen.

Gemäß einer weiteren vorteilhaften Ausführungsform kann der Sperrbolzen wenigstens einen und vorzugsweise mehrere Sperrnuten aufweisen, in die das Sicherungselement in der Eingriffsstellung zur Sperrung des Sperrbolzens verrastet werden kann, um eine Bewegung des Sperrbolzens zu verhindern. Da mehrere Sperrnuten im Sperrbolzen eingebracht sein können, kann das Sicherungselement den Sperrbolzen sowohl in der Sperrstellung als auch in der Freigabestellung sperren. Beispielsweise kann bei einem verschlossenen Fahrzeug der Sperrbolzen in der Sperrstellung gehalten sein. Wird gewaltsam die Anordnung des zweiten Körperteils relativ zum ersten Körperteil verändert, kann das Sicherungselement in eine solche Sperrnut eingreifen, die den Sperrbolzen in der Sperrstellung blockiert.

Erfolgt hingegen eine Änderung der Anordnung des zweiten Körperteils relativ zum ersten Körperteil der Sperranordnung, wenn der Sperrbolzen in der Freigabestellung zur Freigabe der Lenkspindel gehalten ist, kann das Sicherungselement in eine solche Sperrnut eingreifen, die den Sperrbolzen in der Freigabestellung blockiert. Beispielsweise kann in einer Unfallsituation die Lage des ersten Körperteils der Sperrvorrichtung relativ zum zweiten Körperteil verändert werden, etwa indem ein Insasse oder ein weiteres Bauteil auf die Sperrvorrichtung einwirkt, und es muss gewährleistet sein, dass die Lenkspindel weiterhin frei beweglich ist. Folglich ist es vorteilhaft, dass der Sperrbolzen in der Freigabestellung blockiert wird, unabhängig wie im Crash-Fall des Fahrzeugs auf die Mittel zur Bewegung des Sperrbolzens im zweiten Körperteil eingewirkt wird.

Unabhängig von der Situation der Einwirkung auf die Sperrvorrichtung, etwa durch einen Unfall oder durch eine Manipulation durch eine unberechtigte Person, kann die Änderung der Anordnung des ersten Körperteils relativ zum zweiten Körperteil durch ein Trennen oder durch eine Lageänderung des ersten Körperteils vom oder relativ zum zweiten Körperteil hervorgerufen werden. Umfassen beide Körperteile eine gemeinsame Grundstruktur, indem sie beispielsweise einstöckig miteinander ausgeführt sind, kann durch eine gewaltsame Einwirkung die Lage des ersten Körperteils relativ zur Lage des zweiten Körperteils bereits verändert werden. Beispielsweise ein Aufbrechen des Schließzylinders bewirkt ebenfalls eine Lageänderung des ersten Körperteils relativ zum zweiten Körperteil, wobei jede Lageänderung eine Entspannung der federelastischen Vorspannung im Federelement bewirkt, und der erste Schenkel des Federelementes gelangt aus der Aufnahme im ersten Körperteil heraus, und gibt das Sicherungselement zum Eingriff in den Sperrbolzen frei.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Querschnittsansicht der Sperrvorrichtung mit einem ersten Körperteil und einem zweiten Körperteil, wobei im ersten Körperteil ein Sperrbolzen aufgenommen ist, der mit einer Lenkspindel eines Kraftfahrzeugs zusammenwirkt,
- Figur 2: eine Ansicht des Ausführungsbeispiels gemäß Figur 1, wobei das separierbare Bauteil entnommen ist, und das Sicherungsmittel in einer entspannten Lage gezeigt ist,
- Figur 3: eine perspektivische Ansicht des Sicherungsmittels in Gestalt eines Drahtelementes und
- Figur 4: die Wirkverbindung des Sicherungsmittels mit dem Sicherungselement, welches in den Sperrbolzen eingreift.

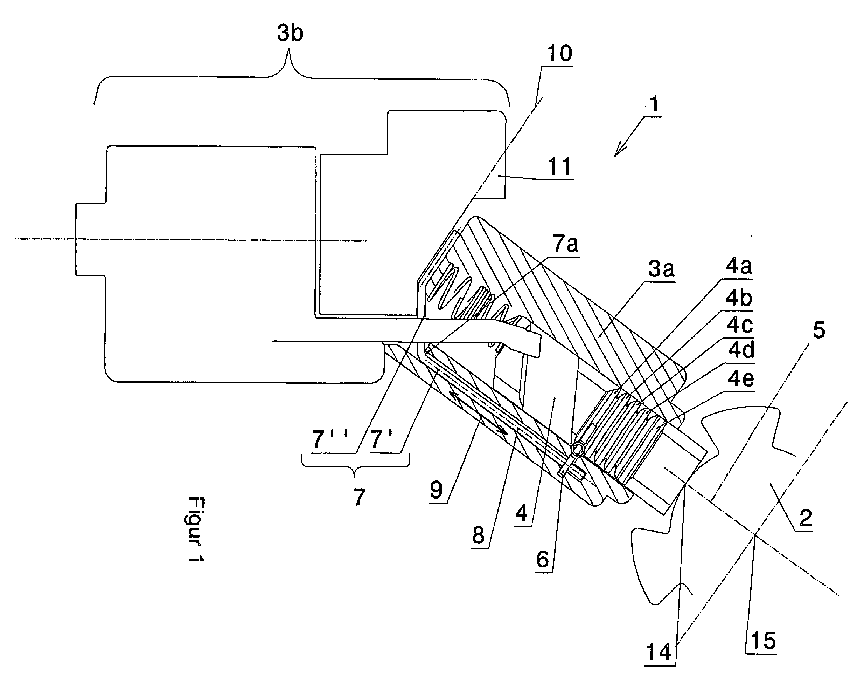

Figur 1 zeigt ein Ausführungsbeispiel einer Sperrvorrichtung 1 zum Sperren eines funktionswesentlichen Bauteils 2, das als Lenkspindel 2 gezeigt ist. Das funktionswesentliche Bauteil 2 kann dabei jedes mechanische Bauteil betreffen, das zum Betrieb eines Kraftfahrzeugs erforderlich ist. Es sind Sperrvorrichtungen 1 bekannt, die beispielsweise in ein Getriebeelement eingreifen, so dass etwa auch ein Getriebeelement ein funktionswesentliches Bauteil 2 bilden kann.

Die Sperrvorrichtung 1 weist zwei Körperteile auf, wobei ein erster Körperteil 3a gezeigt ist, der in seiner Längserstreckung einen Winkel einschließt zu der Längserstreckung eines zweiten Körperteils 3b. Im ersten Körperteil 3a ist ein Sperrbolzen 4 entlang einer Hubachse 5 beweglich aufgenommen, in der der Sperrbolzen 4 zwischen einer Sperrstellung zur Sperrung der Lenkspindel 2 und einer Freigabestellung zur Freigabe der Lenkspindel 2 beweglich ist. Die Lenkspindel 2 weist Nuten 14 auf, wobei der Sperrbolzen 4 in eine Nut 14 in Eingriff steht. Folglich ist die Lenkspindel 2 um die Lenkspindelachse 15 nicht mehr drehbar.

Der zweite Körperteil 3b umfasst eine elektrische Schaltereinheit 11, die an eine Ebene angrenzt, die die Trennebene 10 zwischen dem ersten Körperteil 3a und dem zweiten Körperteil 3b bildet.

Um den Sperrbolzen 4 in der gezeigten Stellung oder in der Freigabestellung blockieren zu können, wenn auf die Sperrvorrichtung 1 eingewirkt wird und wenn sich die Lage des ersten Körperteils 3a relativ zur Lage des zweiten Körperteils 3b ändert, ist ein Sicherungselement 6 vorgesehen, dass plattenartig ausgeführt ist und zum Eingriff in Sperrnuten 4a, 4b, 4c und 4d ausgeführt ist, die im Sperrbolzen 4 eingebracht sind. Um im gewöhnlichen Betrieb der Sperrvorrichtung 1 das Sicherungselement 6 in einer Rückzugsstellung zu halten, ist ein Sicherungsmittel 7 vorgesehen, das als Federelement 7 in Gestalt eines Drahtelementes 7 ausgeführt ist. Das Drahtelement 7 weist eine Biegestelle 7a auf, so dass das Drahtelement 7 in einen ersten Schenkel 7' und einen zweiten Schenkel 7" unterteilt ist. Der erste Schenkel 7' ist in einer Aufnahme 8 eingesetzt, die als Bohrung im ersten Körperteil 3a vorhanden ist und sich parallel zur Hubachse 5 erstreckt. Folglich ist das Federelement 7 mit dem ersten Schenkel 7' hubbeweglich im ersten Körperteil 3a in der Aufnahme 8 aufgenommen.

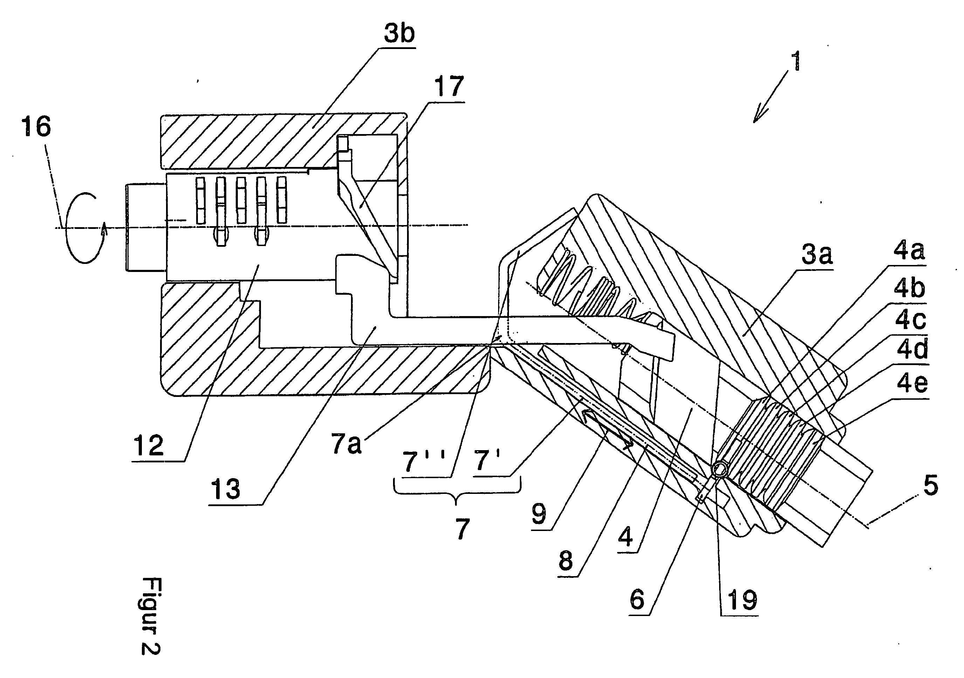

Wird die Lage des zweiten Körperteils 3b relativ zum ersten Körperteil 3a verändert, indem entweder mechanisch auf die Körperteile 3a und 3b eingewirkt wird und die jeweilige Längserstreckung des Körperteils 3a relativ zum Körperteil 3b verändert wird und/oder indem das elektrische Schalterelement 11 manipuliert oder entfernt wird, so kann der erste Schenkel 7' des Federelementes 7 zuverlässig aus der Aufnahme 8 wenigstens ein Stück weit entlang einer Rückfederachse 9 heraus gelangen. Dies geschieht dadurch, dass das Federelement 7 in der gezeigten Anordnung unter Vorspannung in die Sperrvorrichtung 1 eingebracht ist, und sich erst bei Veränderung der Lage des ersten Körperteils 3a relativ zum zweiten Körperteil 3b nach oben stehend genannter Art die genannte Vorspannung entspannen kann. Durch beispielsweise ein Entfernen des elektrischen Schalterelementes 11 kann die Vorspannung im Federelement 7 gelöst werden, wie dies beispielhaft in Figur 2 gezeigt ist.

Figur 2 zeigt eine Querschnittsansicht durch die Sperrvorrichtung 1 gemäß Figur 1, wobei das elektrische Schalterelement 11 entnommen ist, so dass der zweite Körperteil 3b in seiner Anordnung relativ zum ersten Körperteil 3a verändert ist. Da nunmehr der zweite Schenkel 7" des Federelementes 7 nicht mehr an das elektrische Schalterelement 11 angrenzen kann, kann sich die federelastische Vorspannung im Federelement 7 entspannen, und der erste Schenkel 7' gelangt in Richtung zur Rückfederachse 9 ein Stück weit aus der Aufnahme 8 heraus. Dabei wird das Sicherungselement 6 freigegeben, und kann nunmehr in eine der Sperrnuten 4a, 4 b, 4c oder 4d im Sperrbolzen 4 eingreifen.

Die Darstellung zeigt, dass das Federelement 7 mit der Biegestelle 7a aus der Aufnahme 8 herausgelangt ist, so dass die Biegestelle 7a des Federelementes 7 in den Raum hineinspringt, der zuvor durch das elektrische Schalterelement 11 eingenommen war. Damit ist der Sperrbolzen 4 im ersten Körperteil 3a festgesetzt und kann entlang der Hubachse 5 nicht weiter bewegt werden.

Zur gewöhnlichen Bewegung des Sperrbolzens 4 entlang der Hubachse 5 dient ein Schließzylinder 12, der um eine Schließzylinderachse 16 drehbeweglich im zweiten Körperteil 36 aufgenommen ist. Die Mittel zur Bewegung des Sperrbolzens 4 im zweiten Körperteil 3b umfassen ferner ein Rampenelement 17, das mit Drehung des Schließzylinders 12 um die Schließzylinderachse 16 ebenfalls um die Schließzylinderachse 16 drehbar ist. Das Mitnehmerelement 13 kann entlang der Rampe des Rampenelementes 17 verfahren werden, so dass sich das Mitnehmerelement 13 in einer Mitnehmerverstellachse 13a verstellen kann. Durch Wechselwirkung des Mitnehmerelementes 13 mit dem Sperrbolzen 4 kann dieser schließlich in der Hubachse 5 verstellt werden. Der Sperrbolzen 4 ist durch ein Federelement 18 in Richtung zum Eingriff in die Lenkspindel 2 vorgespannt, wobei sich das Federelement 18 zwischen dem Sperrbolzen 4 und einem Gehäuseende des ersten Körperteils 3a erstreckt.

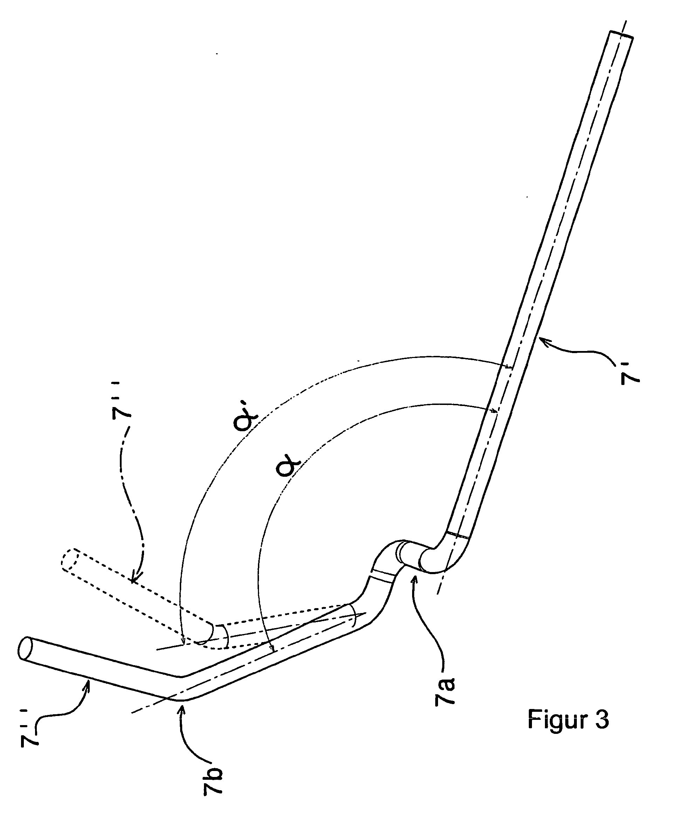

Figur 3 zeigt eine perspektivische Ansicht des Federelementes 7, wobei eine erste Biegestelle 7a und eine zweite Biegestelle 7b gezeigt sind. Die erste Biegestelle 7a unterteilt das Federelement 7 in einen ersten Schenkel 7' und in einen zweiten Schenkel 7". Die beiden Schenkel 7' und 7" schließen einen Winkel α ein, der den Winkel zwischen den beiden Schenkeln 7' und 7" beschreibt, wenn das Federelement 7 vorgespannt ist, wobei ohne Vorspannung der zweite Schenkel 7" unter dem Winkel α' gestrichelt dargestellt ist. Wird das Federelement 7 vorgespannt, indem etwa das elektrische Schalterelement 11 zur Vervollständigung des zweiten Körperteils 3b eingesetzt wird, so wird das Federelement 7 über die Biegestelle 7a in die Aufnahme 8 im ersten Körperteil 3a eingeschoben, und der Winkel zwischen den beiden Schenkeln 7' und 7" vergrößert sich, so dass sich der Winkel α als Winkel unter Vorspannung zwischen den beiden Schenkeln 7' und 7" ergibt, der größer ist als der Winkel α' ohne Vorspannung.

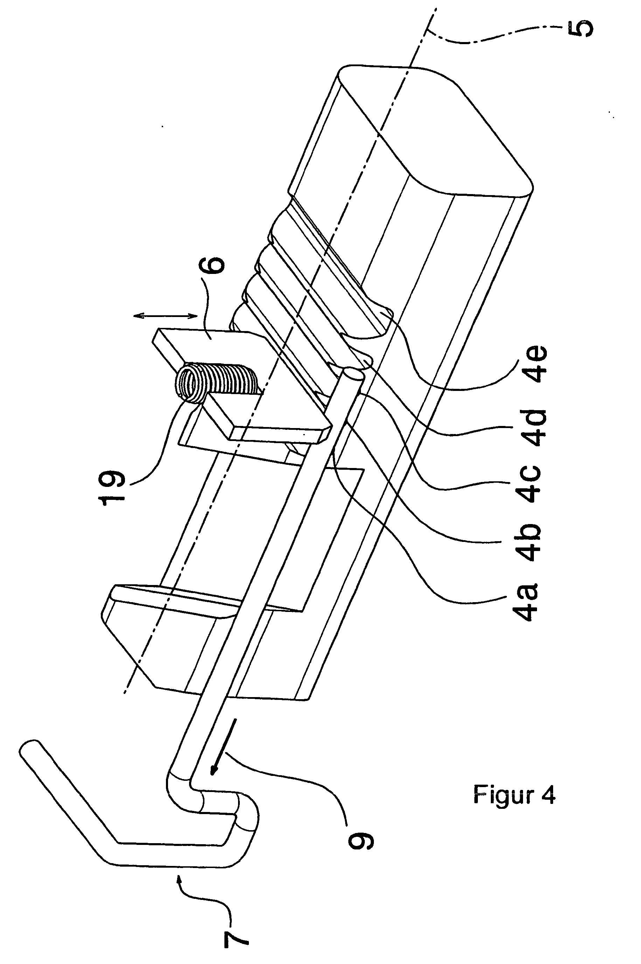

Figur 4 zeigt in einer perspektivischen Ansicht ein weiteres Mal den Sperrbolzen 4 sowie die Anordnung des Federelementes 7 in Verbindung mit dem Sicherungselement 6. Das Sicherungselement 6 ist plattenförmig ausgebildet und durch ein Federelement 19 in Richtung zum Eingriff in eine der Sperrnuten 4a, 4b, 4c oder 4d vorgespannt. In der gezeigten Anordnung greift das Federelement 7 in das Sicherungselement 6 derart ein, dass das Sicherungselement 6 trotz der Federbelastung durch das Federelement 19 nicht in eine der Sperrnuten 4a, 4b, 4c oder 4d gelangen kann. Wird jedoch das Federelement 7 in Richtung zur Rückfederachse 9 zurückgezogen, so löst sich der Eingriff des Federelementes 7 vom Sicherungselement 6, und das Sicherungselement 6 kann durch Eingriff in eine der Sperrnuten 4a, 4b, 4c oder 4d den Sperrbolzen 4 blockieren, so dass dieser nicht mehr in Richtung zur Hubachse 5 beweglich ist.

Damit ist eine wirkungsvolle Rückhaltung des Sicherungselementes 6 ermöglicht, wobei lediglich ein einfaches Federelement 7 in Gestalt eines Drahtelementes 7 Verwendung findet. Das Lösen des Drahtelementes 7 von dem Sicherungselement 6 erfolgt durch einfaches eigenelastisches Rückfedern des Drahtelementes 7, wenn die Anordnung des ersten Körperteils 3a relativ zur Lage des zweiten Körperteils 3b verändert wird. Die Änderung der Anordnung umfasst dabei ausdrücklich auch ein Entfernen und/oder Manipulieren des elektrischen Schalterelementes 11, durch das das Federelement 7 in die Aufnahme 8 im ersten Körperteil 3a gehalten ist.

### Bezugszeichenliste

- 1: Sperrvorrichtung
- 2: funktionswesentliches Bauteil, Lenkspindel
- 3a: erster Körperteil
- 3b: zweiter Körperteil
- 4: Sperrbolzen
- 4a: Sperrnut
- 4b: Sperrnut
- 4c: Sperrnut
- 4d: Sperrnut
- 5: Hubachse
- 6: Sicherungselement
- 7: Sicherungsmittel, Federelement, Drahtelement
- 7': erster Schenkel
- 7": zweiter Schenkel
- 7a: Biegestelle
- 7b: Biegestelle
- 8: Aufnahme
- 9: Rückfederachse
- 10: Trennebene
- 11: separierbares Bauelement, elektrisches Schalterelement
- 12: Schließzylinder
- 13: Mitnehmerelement
- 14: Nut
- 15: Lenkspindelachse
- 16: Schließzylinderachse
- 17: Rampenelement
- 18: Federelement
- 19: Federelement

- α: Winkel unter Vorspannung
- α': Winkel ohne Vorspannung

## Patentansprüche

1. Sperrvorrichtung (1) zum Sperren eines funktionswesentlichen Bauteils (2) eines Kraftfahrzeugs, insbesondere zur Sperrung einer Lenkspindel (2),
mit einem ersten Körperteil (3a), in dem ein Sperrbolzen (4) aufgenommenen ist, der in einer Hubachse (5) zwischen einer Sperrstellung zur Sperrung des funktionswesentlichen Bauteils (2) und einer Freigabestellung zur Freigabe des funktionswesentlichen Bauteils (2) beweglich ist,
mit einem zweiten Körperteil (3b), in dem Mittel zur Bewegung des Sperrbolzens (4) zwischen der Sperrstellung und der Freigabestellung aufgenommen sind,
wobei ein Sicherungselement (6) vorgesehen ist, das in einer Eingriffsstellung eine Bewegung des Sperrbolzens (4) verhindert und in einer Rückzugsstellung eine Bewegung des Sperrbolzens (4) freigibt, wobei
das Sicherungselement (6) durch ein Sicherungsmittel (7) in der Rückzugsstellung gehalten ist, wenn der erste Körperteil (3a) am zweiten Körperteil (3b) angeordnet ist,
und in die Eingriffsstellung freigebbar ist, wenn der erste Körperteil (3a) in seiner Anordnung zum zweiten Körperteil (3b) verändert wird,
**dadurch gekennzeichnet,**
**dass** das Sicherungsmittel (7) als Federelement (7) ausgebildet ist und eine federelastische Vorspannung aufweist, wenn der erste Körperteil (3a) am zweiten Körperteil (3b) angeordnet ist,
wobei die federelastische Vorspannung im Federelement (7) derart ausgebildet ist, dass das Federelement (7) durch Rückfederung das Sicherungselement (6) aus der Rückzugsstellung in die Eingriffsstellung freigibt, wenn der erste Körperteil (3a) in seiner Anordnung zum zweiten Körperteil (3b) verändert wird.

2. Sperrvorrichtung (1) nach Anspruch 1,
**dadurch gekennzeichnet,**
**dass** das Federelement (7) als Drahtelement (7) ausgeführt ist, wobei das Drahtelement (7) vorzugsweise wenigstens eine Biegestelle (7a, 7b) aufweist, durch die das Drahtelement (7) in einen ersten Schenkel (7') und einen zweiten Schenkel (7") unterteilt ist.

3. Sperrvorrichtung (1) nach Anspruch 2,
**dadurch gekennzeichnet,**
**dass** der erste Körperteil (3a) eine Aufnahme (8) aufweist, in die zumindest der erste Schenkel (7') des Federelementes (7) wenigstens teilweise entlang einer Rückfederachse (9) beweglich geführt aufgenommen ist.

4. Sperrvorrichtung (1) nach Anspruch 2 oder 3,
**dadurch gekennzeichnet,**
**dass** der erste Körperteil (3a) und der zweite Körperteil (3b) in einer Trennebene (10) aneinander angrenzen, wobei sich der zweite Schenkel (7") des Federelementes (7) in die Trennebene (10) hinein erstreckt.

5. Sperrvorrichtung (1) nach einem der Ansprüche 2 bis 4,
**dadurch gekennzeichnet,**
**dass** der erste Schenkel (7') und der zweite Schenkel (7") des Federelementes (7) einen Winkel (α) zueinander einschließen, wobei der Winkel (a) unter der Vorspannung im Federelement (7) größer ist als bei Rückfederung des Federelementes (7).

6. Sperrvorrichtung (1) nach einem der Ansprüche 2 bis 5,
**dadurch gekennzeichnet,**
**dass** die Vorspannung durch ein Verspannen in das Federelement (7) einbringbar ist, indem das erste Körperteil (3a) am zweiten Körperteil (3b) angeordnet wird, und der zweite Schenkel (7") in der Trennebene (10) zwischen dem ersten Körperteil (3a) und dem zweiten Körperteil (3b) unter Aufbringung der Vorspannung geklemmt wird.

7. Sperrvorrichtung (1) nach einem der Ansprüche 4 bis 6,
**dadurch gekennzeichnet,**
**dass** der zweite Körperteil (3b) ein separierbares Bauelement (11) umfasst, wobei das separierbare Bauelement (11) vorzugsweise an die Trennebene (10) angrenzt, und wobei insbesondere das separierbare Bauelement (11) ein elektrisches Schalterelement (11) ist.

8. Sperrvorrichtung (1) nach einem der vorgenannten Ansprüche,
**dadurch gekennzeichnet,**
**dass** die Mittel zur Bewegung des Sperrbolzens (4) im zweiten Körperteil (3b) einen Schließzylinder (12) umfassen, in den ein Schlüssel zur Drehung des Schließrylinders (12) einbringbar ist.

9. Sperrvorrichtung (1) nach Anspruch 8,
**dadurch gekennzeichnet,**
**dass** ein Mitnehmerelement (13) vorgesehen ist, das durch Drehung des Schließzylinders (12) beweglich ist und das mit dem Sperrbolzen (4) in Wirkverbindung steht, um diesen bei Drehung des Schließzylinders (12) zwischen der Sperrstellung und der Freigabestellung entlang der Hubachse (5) zu bewegen.

10. Sperrvorrichtung (1) nach einem der vorgenannten Ansprüche,
**dadurch gekennzeichnet,**
**dass** der Sperrbolzen (4) wenigstens einen und vorzugsweise mehrere Sperrnuten (4a, 4b, 4c, 4d) aufweist, in die das Sicherungselement (6) in der Eingriffsstellung zur Sperrung des Sperrbolzens (4) verrastbar ist, um eine Bewegung des Sperrbolzens (4) zu verhindern.

11. Sperrvorrichtung (1) nach einem der vorgenannten Ansprüche,
**dadurch gekennzeichnet,**
**dass** die Änderung der Anordnung des ersten Körperteils (3a) in seiner Anordnung zum zweiten Körperteil (3b) durch ein Trennen oder eine durch eine Lageänderung des ersten Körperteils (3a) vom oder relativ zum zweiten Körperteil (3b) gebildet ist.

12. Sperrvorrichtung (1) nach einem der vorgenannten Ansprüche,
**dadurch gekennzeichnet,**
**dass** die Änderung der Anordnung des ersten Körperteils (3a) in seiner Anordnung zum zweiten Körperteil (3b) durch eine Manipulation und/oder durch ein Entfernen des separierbaren Bauelementes (11) des ersten Körperteils (3a) gebildet ist.

## Claims

1. Locking Device (1) for locking a function essential component (2) of a vehicle, particularly for locking the steering shaft (2),
with a first body part (3a), in which a locking bolt (4) is accepted, which Is moveable along a hoist axis (5) between a blocking position for blocking the function essential component (2) and a releasing position for releasing the function essential component (2),
with a second body part (3b), In which means are accepted for moving the locking bolt (4) between a blocking position and a releasing position,
wherein a security element (6) Is provided, preventing the movement of the locking bolt (4) in an engagement position and Is approving a movement of a locking bolt (4) in a rejecting position, wherein
the security element (6) is kept In the rejecting position via a securing means (7), if the first body part (3a) is assembled at the second body part (3b),
and is approvable in the engagement position, when the assembly of the first body part (3a) is modified towards the second body part (3b),
**characterized in that**,
the securing means (7) Is formed as a spring element (7) and comprising a resilient pre stressing, if the first body part (3a) Is assembled at the second body part (3b),
wherein the resilient pre stressing of the spring element (7) Is shaped In such a manor, that the spring element (7) is releasing the security element (6) from the retracting position into the engaging position via spring back, If the
first body part (3a) Is modified In Its assembly towards the second body part (3b).

2. Locking device (1) according to claim 1,
**characterized in that**,
the spring element (7) is conducted as a wire element (7), wherein the wire element (7) preferably comprises at least one bending position (7a, 7b), through which the wire element (7) Is divided In a first leg (7') and a second leg (7").

3. Locking device (1) according to claim 2,
**characterized in that**,
the first body part (3a) comprises an acceptance (8), in which at least the first leg (7') of the spring element (7) Is accepted at least partly guided along a spring back axis (9) in a movable way.

4. Locking device (1) according to claim 2 or 3,
**characterized In that**,
the first body part (3a) and the second body part (3b) are joining in a parting line (10), wherein the second leg (7") of the spring element (7) Is extending Into the parting line (10).

5. Locking device (1) according to one of the claims 2 to 4,
**characterized in that**,
the first leg (7') and the second leg (7") of the spring element (7) are enclosing an angle (α) to each other, wherein the angle (α) is under pre stressing In the spring element (7) greater as during the spring back of the spring element (7).

6. Locking device (1) according to one of the claims 2 to 5,
**characterized in that**,
the pre stressing can be brought Into the spring element (7), via bracing by assembling the first body part (3a) at the second body part (3b), and the second leg (7") Is clammed In the parting line (10) between the first body part (3a) and the second body part (3b) by applying a pre stressing.

7. Locking device (1) according to one of the claims 4 to 6,
**characterized in that**,
the second body part (3b) comprises a separable component (11), wherein the separable component (11) is joining preferably the parting line (10), and wherein particularly the separable component (11) is an electric switch element (11).

8. Locking device (1) according to one of the preceding claims,
**characterized in that**,
the means for moving the locking bolt (4) in the second body part (3b) comprise a locking cylinder (12), in which a key for turning the locking cylinder (12) is insertable.

9. Locking device (1) according to claim 8,
**characterized in that**,
the actuator element (13) is provided, which is movable by turning of the locking cylinder (12) and which Is In operative connection to the locking bolt (4) to move the locking bolt (4) during turning of the locking cylinder (12) between a blocking position and the releasing position along side the hoist axis (5).

10. Locking device (1) according to one of the preceding claims,
**characterized in that**,
the locking bolt (4) comprises at least one and preferably multiple locking grooves (4a, 4b, 4c, 4d), in which the security element (6) is lockable in the engagement position for blocking the locking bolt (4), to prevent a movement of the blocking bolt (4).

11. Locking device (1) according to one of the preceding claims,
**characterized in that**,
a modification of the assembly of the first body part (3a) towards the assembly of the second body part (3b) Is built via a separation or via an alternation of length of the first body part (3a) from or relative from the second body part (3b).

12. Locking device (1) according to one of the preceding claims,
**characterised in that**,
the modification of the assembly of the first body part (3a) towards the assembly of the second body part (3b) is built through a manipulation and/or through a removing of the separable component (11) of the first body part (3a).

## Revendications

1. Dispositif de verrouillage (1) destiné au verrouillage d'un élément fonctionnellement essentiel (2) d'un véhicule automobile, en particulier pour le verrouillage d'un arbre de direction (2),
avec une première partie de corps (3a), dans laquelle est reçu un boulon de verrouillage (4) qui est mobile suivant un axe de translation (5) entre une position de verrouillage pour verrouiller l'élément fonctionnellement essentiel (2) et une position de libération pour libérer l'élément fonctionnellement essentiel (2),
avec une deuxième partie de corps (3b), dans laquelle sont reçus des moyens pour déplacer le boulon de verrouillage (4) entre la position de verrouillage et la position de libération,
sachant qu'il est prévu un élément de blocage (6) qui, dans une position d'engagement, empêche le déplacement du boulon de verrouillage (4) et qui, dans une position de retrait, autorise le déplacement du boulon de verrouillage (4),
sachant que l'élément de blocage (6) est maintenu en position de retrait par un organe de blocage (7) lorsque la première partie de corps (3a) est disposée contre la deuxième partie de corps (3b),
et qu'il peut être libéré en position d'engagement lorsque la disposition de la première partie de corps (3 a) par rapport à la deuxième partie de corps (3b) est modifiée, **caractérisé en ce que** l'organe de blocage (7) est réalisé sous forme d'élément à effet de ressort (7) et présente une précontrainte élastique de ressort lorsque la première partie de corps (3a) est disposée contre la deuxième partie de corps (3b),
sachant que la précontrainte élastique de ressort dans l'élément à effet de ressort (7) est conçue de telle sorte que l'élément à effet de ressort (7) libère par rappel élastique l'élément de blocage (6) de la position de retrait dans la position d'engagement lorsque la disposition de la première partie de corps (3a) par rapport à la deuxième partie de corps (3b) est modifiée.

2. Dispositif de verrouillage (1) selon la revendication 1, **caractérisé en ce que** l'élément à effet de ressort (7) est réalisé sous forme d'élément en fil métallique (7), sachant que l'élément en fil métallique (7) présente de préférence au moins un point de courbure (7a, 7b) par lequel l'élément en fil métallique (7) est divisé en une première branche (7') et une deuxième branche (7").

3. Dispositif de verrouillage (1) selon la revendication 2, **caractérisé en ce que** la première partie de corps (3a) présente un logement (8) dans lequel au moins la première branche (7') de l'élément à effet de ressort (7) est reçue en étant guidée en déplacement au moins pour partie le long d'un axe de rappel élastique (9).

4. Dispositif de verrouillage (1) selon la revendication 2 ou 3, **caractérisé en ce que** la première partie de corps (3a) et la deuxième partie de corps (3b) sont adjacentes dans un plan de séparation (10), la deuxième branche (7") de l'élément à effet de ressort (7) s'étendant à l'intérieur du plan de séparation (10).

5. Dispositif de verrouillage (1) selon l'une des revendications 2 à 4, **caractérisé en ce que** la première branche (7') et la deuxième branche (7") de l'élément à effet de ressort (7) forment entre elles un angle (α), sachant que l'angle (α) est plus grand sous la précontrainte dans l'élément à effet de ressort (7) que lors du rappel élastique de l'élément à effet de ressort (7).

6. Dispositif de verrouillage (1) selon l'une des revendications 2 à 5, **caractérisé en ce que** la précontrainte peut être imprimée par une contrainte dans l'élément effet de ressort (7), par le fait que la première partie de corps (3a) est disposée contre la deuxième partie de corps (3b) et que la deuxième branche (7") est serrée dans le plan de séparation (10) entre la première partie de corps (3a) et la deuxième partie de corps (3b) en imprimant la précontrainte.

7. Dispositif de verrouillage (1) selon l'une des revendications 4 à 6, **caractérisé en ce que** la deuxième partie de corps (3b) comprend un élément séparable (11), sachant que l'élément séparable (11) est de préférence adjacent au plan de séparation (10), et sachant que l'élément séparable (11) est notamment un élément commutateur électrique (11).

8. Dispositif de verrouillage (1) selon l'une des revendications précédentes, **caractérisé en ce que** les moyens pour déplacer le boulon de verrouillage (4) dans la deuxième partie de corps (3b) comprennent un cylindre de serrure (12) dans lequel peut être introduite une clé pour tourner le cylindre de serrure (12).

9. Dispositif de verrouillage (1) selon la revendication 8, **caractérisé en ce qu'**il est prévu un élément entraîneur (13), qui est mobile par la rotation du cylindre de serrure (12) et qui se trouve en liaison fonctionnelle avec le boulon de verrouillage (4) pour déplacer ce dernier, lors de la rotation du cylindre de serrure (12), entre la position de verrouillage et la position de libération le long de l'axe de translation (5).

10. Dispositif de verrouillage (1) selon l'une des revendications précédentes, **caractérisé en ce que** le boulon de verrouillage (4) présente au moins une et de préférence plusieurs rainures de verrouillage (4a, 4b, 4c, 4d) dans lesquelles l'élément de blocage (6) peut être enclenché dans la position d'engagement afin de bloquer le boulon de verrouillage (4) pour empêcher le déplacement de ce dernier.

11. Dispositif de verrouillage (1) selon l'une des revendications précédentes, **caractérisé en ce que** la modification de la disposition de la première partie de corps (3a) par rapport à la deuxième partie de corps (3b) s'effectue en séparant la première partie de corps (3a) de la deuxième partie de corps (3b) ou en modifiant la position de la première partie de corps (3a) par rapport à la deuxième partie de corps (3b).

12. Dispositif de verrouillage (1) selon l'une des revendications précédentes, **caractérisé en ce que** la modification de la disposition de la première partie de corps (3a) par rapport à la deuxième partie de corps (3b) est réalisée par une manipulation et/ou en retirant de la première partie de corps (3a) l'élément séparable (11).
